Europäisches Patentamt

European Patent Office

Office européen des brevets

(11) Numéro de publication: **0 363 265**
**A1**

(12) **DEMANDE DE BREVET EUROPEEN**

(21) Numéro de dépôt: 89402705.1

(51) Int. Cl.⁵: **G01N 21/25 , G01N 35/06**

(22) Date de dépôt: **02.10.89**

(30) Priorité: **03.10.88 FR 8812889**

(43) Date de publication de la demande:
**11.04.90 Bulletin 90/15**

(84) Etats contractants désignés:
**AT BE CH DE ES FR GB GR IT LI LU NL SE**

(71) Demandeur: **BIOSEMA S.A.**
**52-56 rue Kléber**
**F-92300 Levallois(FR)**

(72) Inventeur: **Covain, Serge Albert**
**18 rue Charles Péguy**
**F-95560 Baillet(FR)**

(74) Mandataire: **Lhuillier, René et al**
**ARMENGAUD JEUNE CABINET LEPEUDRY 6,**
**rue du Fg. St-Honoré**
**F-75008 Paris(FR)**

(54) **Analyseur automatique d'échantillons par colorimétrie, notamment pour les analyses sanguines.**

(57) La couronne réactionnelle (1) portant sur sa périphérie une série de cuvettes transparentes (12) est fixe. Un disque tournant (2) concentrique à la couronne réactionnelle et orienté vers le bas, en direction du sommet de la cuvette porte une fibre optique (20) entre une partie centrale ou elle reçoit la lumière provenant d'une source lumineuse fixe (41) et une partie périphérique ou son autre extrémité (23) débouche en face du fond de la cuvette, en alignement avec le photomultiplicateur (28).

Application aux analyses sanguines.

FIG. 2

## Analyseur automatique d'échantillons par colorimétrie notamment pour les analyses sanguines

L'invention qui se rapporte à un analyseur automatique d'échantillons, notamment de sang, par colorimétrie, concerne plus précisément l'agencement d'un dispositif tournant de détection colorimétrique par rapport à une couronne fixe constituant le plateau de réaction.

Dans le domaine de la biochimie, pour assurer la mesure en continu du sang il est connu d'utiliser un analyseur d'échantillons qui comporte trois éléments essentiels. Tout d'abord il y a un plateau tournant porteur d'échantillons de sang qui possède sur sa périphérie une pluralité d'alvéoles destinées à recevoir les tubes de sang tel que prélevé, tubes qui sont repérés et marqués en fonction du nombre et de la nature des analyses qu'il doit subir. A côté de ce premier plateau porteur d'échantillons est placé un autre plateau tournant qui est garni d'un certain nombre de flacons contenant chacun un réactif. Enfin un troisième plateau également tournant est muni sur sa périphérie de cuvettes transparentes destinées à recevoir un mélange dosé de sang et de réactif. Ces trois plateaux sont avantageusement disposés en triangle pour qu'un ou plusieurs bras rotatifs portant une pipette d'aspiration puissent prélever un peu de sang dans une éprouvette déterminée du premier plateau, puis un peu de réactif dans un flacon du deuxième, et les déposer à tour de rôle dans une des cuvettes du plateau tournant après son positionnement par rotation vis-à-vis du bras de transfert, un système de lavage des pipettes de distribution étant bien évidemment prévu entre chaque prélèvement. La cuvette étant ainsi remplie du mélange, la réaction entre les deux composants peut s'effectuer et au bout de quelque temps le mélange peut être soumis à l'analyse colorimétrique. Ce troisième plateau est alors déplacé par un moteur pas-à-pas qui va positionner la cuvette à mesurer en face d'une lampe du type tungstène-halogène qui, par l'intermédiaire de filtres et de lentilles va projeter un faisceau de lumière appropriée sur la cuvette. Le faisceau traverse horizontalement l'échantillon et est reçu par un photodétecteur de mesure placé de manière fixe au centre du plateau de réaction. Ce plateau est appelé aussi plateau "consommable" car quand toutes les cuvettes sont remplies, et les analyses effectuées, il est purement et simplement enlevé de l'appareil et éliminé, pour être remplacé par un plateau neuf dont les cuvettes sont prêtes alors pour un nouveau remplissage.

Cette nécessité du remplacement global du plateau consommable est un inconvénient important car elle impose l'immobilisation de l'appareil pendant un temps non négligeable qui peut dépasser un quart d'heure. Cette immobilisation est due, d'une part au temps matériel de remplacement du plateau, de sa remise à zéro et du rétablissement des connections, mais d'autre part et surtout au fait que après le nouveau remplissage des premières cuvettes, il faudra attendre pour faire la première mesure que les réactions se soient effectuées ce qui ne se fait pas instantanément. De même quand toutes les cuvettes sont remplies, il faut de toute façon attendre que toutes les réactions soient finies pour terminer les dernières analyses. Cet inconvénient est particulièrement sensible quand une demande d'analyse en urgence intervient pendant cette durée d'immobilisation, parce qu'il est alors impossible de la faire "passer" en priorité, tant que l'appareil n'a pas retrouvé son fonctionnement normal. En outre cette pluralité de plateaux tournants nécessite plusieurs mécanismes d'entraînement et de positionnement et un bras de prélèvement à grand débattement pour les desservir tous les trois ou encore plusieurs bras chacun destiné au transfert entre deux plateaux voisins. Tout cela rend l'appareil d'analyse volumineux et encombrant.

Certes, on a bien imaginé de remplacer le plateau de réaction tournant par un système du genre à tiroirs, chaque tiroir étant constitué d'un certain nombre de cuvettes, les tiroirs mis côte à côte ou les uns au-dessous des autres, pouvant coulisser les uns par rapport aux autres par des déplacements en translation, selon des coordonnées rectangulaires. On pourrait ainsi remplacer une série de cuvettes du tiroir sans interrompre les réactions ou les opérations en cours dans les autres tiroirs. Mais ce système séduisant dans son principe s'avère inapplicable du fait de la complexité des mécanismes qui doivent assurer les déplacements des divers éléments mobiles. En outre ces plateaux à tiroir se prêtent mal à la thermostatisation nécessaire des récipients récepteurs du mélange.

La Demanderesse a donc imaginé un analyseur automatique d'échantillons par colorimétrie qui ne présente aucun des inconvénients rapportés ci-dessus, propres aux appareils connus, mais au contraire permet un fonctionnement continu des analyses, avec une rapidité et une fiabilité accrues, et cela grâce à un appareil de plus faible encombrement.

Un objet principal de la présente invention consiste donc en un analyseur automatique d'échantillons par colorimétrie, notamment pour les analyses sanguines comportant un plateau porteur d'échantillons, une couronne réactionnelle munie sur sa périphérie d'une pluralité d'alvéoles pouvant supporter des cuvettes transparentes destinées à recevoir un mélange d'échantillon et de réactif à analyser, un autre plateau porteur de flacons de réactifs, un système de prélèvement et de distribution de l'échantillon et du réactif dans les cuvettes réactionnelles constitué d'un mécanisme du genre à bras rotatifs et/ou articulés portant des pipettes d'aspiration, et un ensemble d'analyse colorimétrique utilisant notamment une source lumineuse, des filtres colorés et un photomultiplicateur de mesure du rayon lumineux ayant traversé une cuvette réactionnelle et ledit analyseur se caractérise en ce que la couronne réactionnelle portant sur sa périphérie la série de cuvettes transparentes est fixe, tandis que le photomultiplicateur de mesure est monté sur un disque tournant concentrique à la couronne réactionnelle, et orienté vers le bas en direction du sommet de la cuvette, le disque portant également au moins une fibre optique entre une partie centrale ou elle reçoit la lumière provenant d'une source lumineuse fixe et une partie périphérique où son autre extrémité débouche en face du fond de la cuvette, en alignement avec le photomultiplicateur, et en ce que des moyens sont prévus pour assurer en continu à l'aide d'au moins deux pipettes d'aspiration à fonctionnement indépendant le prélèvement d'échantillon et de réactif et leur distribution dans les coupelles.

Selon une caractéristique particulière de l'invention, la couronne réactionnelle est formée par la juxtaposition de trois secteurs de couronnes formant des tiroirs amovibles pouvant être écartés de ses voisins.

Avantageusement un panier fixe servant de support à une pluralité de flacons de réactif est disposé au centre de la couronne réactionnelle fixe, les flacons étant régulièrement et concentriquement répartis dans le panier autour d'un réservoir cylindrique central constituant une station de lavage.

Selon l'invention la fibre optique portée par le disque tournant comporte une dérivation en direction d'un photomultiplicateur de référence, qui est fixe ou encore monté sur le disque tournant.

L'invention prévoit également que le disque tournant présente une bordure circulaire verticale prolongée par un rebord périphérique horizontal sur lequel est monté la photomultiplicateur de mesure, la fibre optique débouchant dans un boîtier fixé extérieurement à la bordure circulaire verticale.

Le disque tournant est solidaire d'une couronne d'entraînement mise en rotation par un moteur par l'intermédiaire de courroies de transmission et d'au moins une couronne de démultiplication. Il comporte une platine centrale qui est traversée par une ouverture et qui est solidaire de la couronne d'entraînement elle-même munie d'un puits central pour le passage de la fibre qui affleure à la partie inférieure de ladite couronne.

Avantageusement l'extrémité de la libre optique débouche dans un boîtier fixé extérieurement à la bordure verticale, et est orientée vers le haut en direction de lentilles optiques de sortie.

Selon une autre caractéristique principale de l'invention le mécanisme de manoeuvre des pipettes de prélèvement comprend un mât vertical fixe, une potence coulissant verticalement sur ledit mât, un bras rotatif monté sur la potence, et au moins une pipette de prélèvement montée à chaque extrémité du bras rotatif.

Plus précisément, le mouvement de coulissement de la potence sur des guides solidaires du mât est assuré par une tige filetée verticale entraînée en rotation par un moteur et coopérant avec un taraudage prévu dans le pied de la potence.

En outre le bras rotatif solidaire d'un manchon central est soutenu au-dessous de l'extrémité de la potence et est mis en rotation par un moteur par l'intermédiaire de courroies de transmission et d'au moins un pignon démultiplicateur.

De plus deux moteurs fixés sous le bras rotatif entraînent chacun en rotation autour d'axes localisés à chaque extrémité du bras rotatif, un bras de prélèvement portant chacun deux pipettes de prélèvement.

D'autres caractéristiques particulières et avantages de l'invention apparaîtront à la lecture de la description qui va suivre d'exemples non limitatifs de réalisation, faisant référence aux dessins annexés qui représentent.

Figure 1 une vue schématique en plan, et

figure 2 une vue schématique en coupe de l'analyseur.

Figure 3 une vue en coupe et figure 4 une vue en plan du disque tournant à fibre optique.

Figure 5 une vue en coupe et figure 6 une vue en plan du mécanisme de manoeuvre des pipettes de prélèvement.

Figures 7 à 9, des vues schématiques montrant les phases de remplissage des cuvettes réactionnelles.

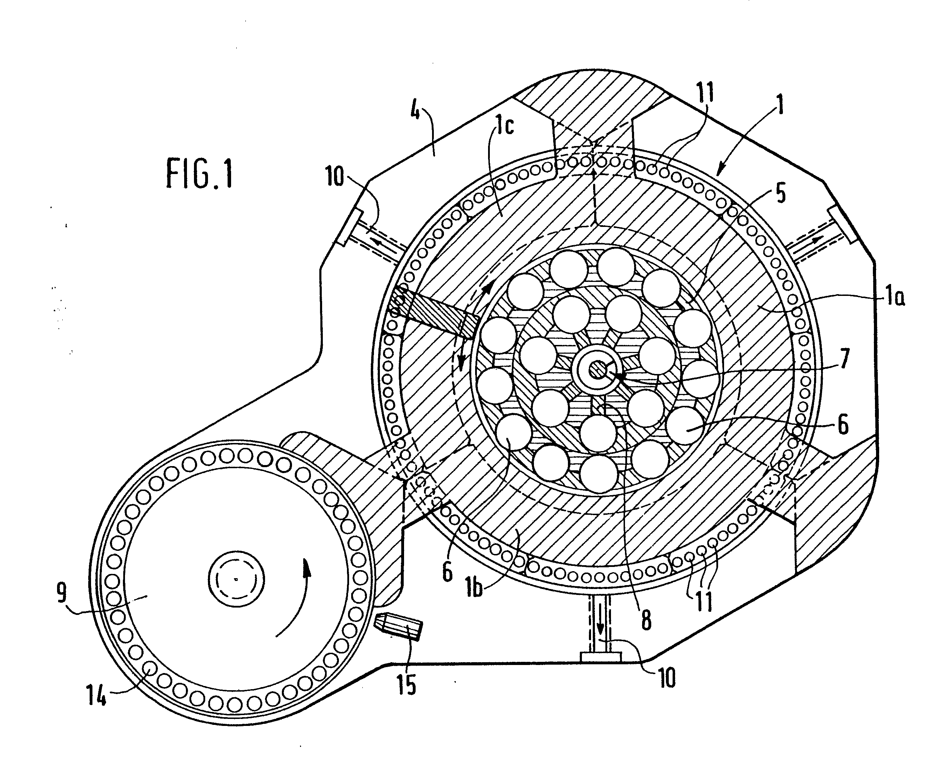

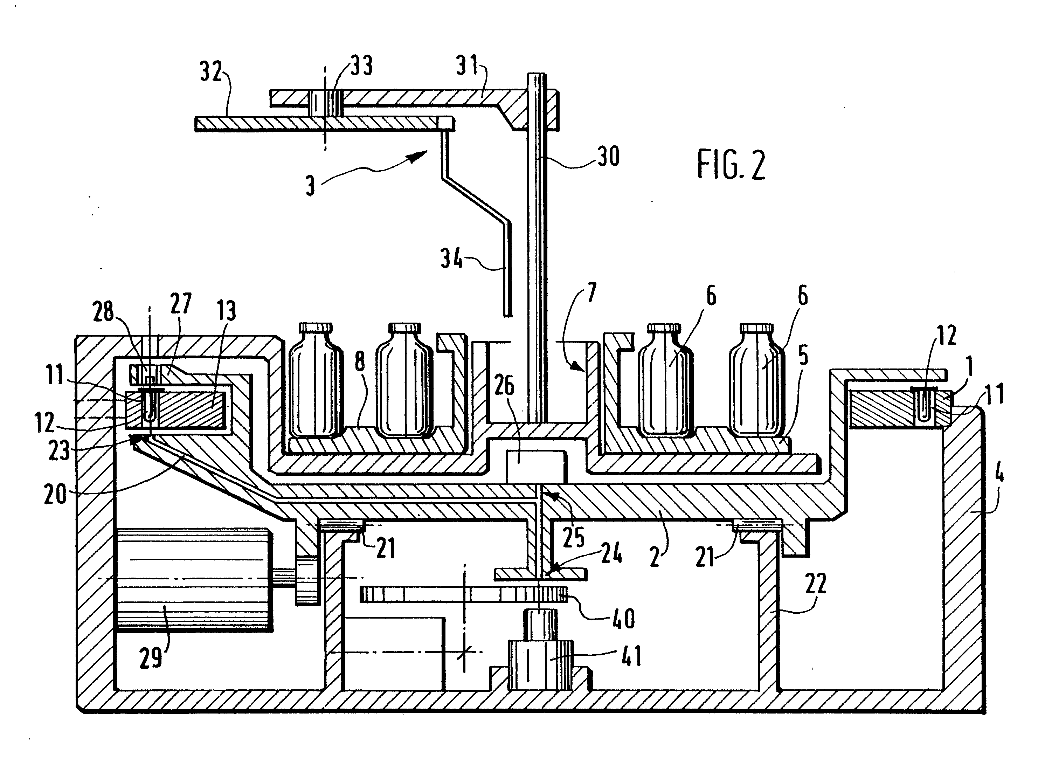

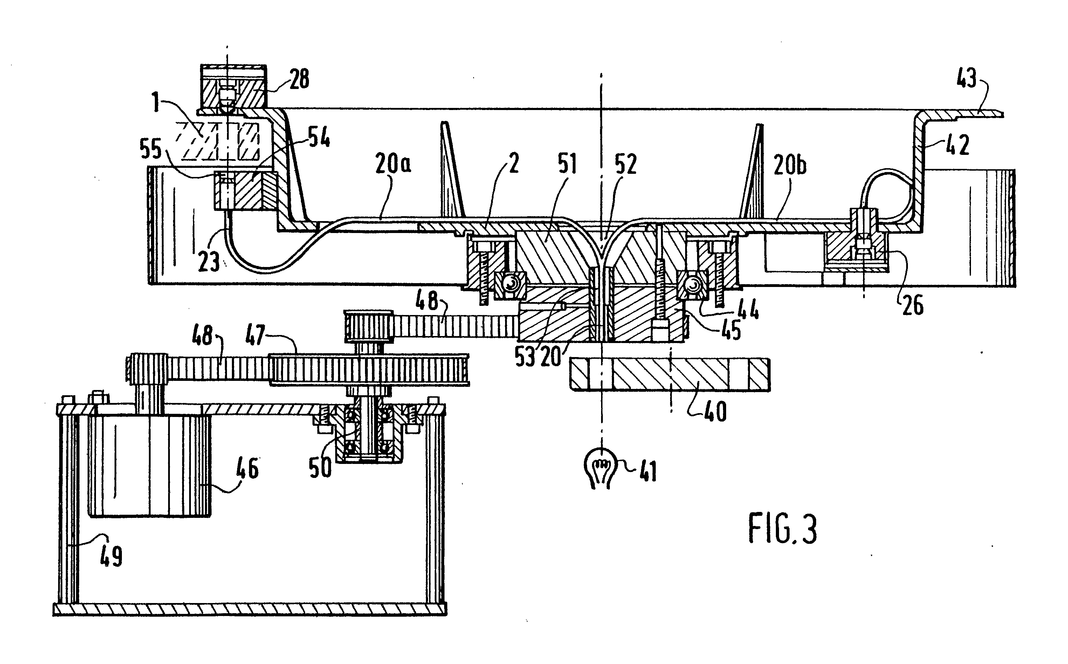

On a représenté aux figures 1 et 2 un analyseur automatique d'échantillons qui montre schématiquement les principaux éléments constitutifs de l'appareil, de façon à en comprendre les principales caractéristiques et le fonctionnement, certains ensembles particuliers étant ensuite expliqués plus en détail en référence aux figures 3 à 6.

Sur un socle support fixe 4 qui forme l'embase de l'analyseur, repose une couronne réactionnelle fixe désignée dans son ensemble par la référence 1, qui est formée par la juxtaposition de trois secteurs de couronnes 1a, 1b et 1c formant des tiroirs amovibles, chaque tiroir pouvant être écarté indépendamment de ses voisins en coulissant sur une glissière 10. La couronne 1 porte à sa périphérie une série de puits 11 placés côte à côte, dans lesquels peuvent se positionner des petites cuvettes 12 dont le fond transparent affleure à la base du puits. En outre un dispositif de thermostatisation 13 localisé sur la couronne, le long des puits 11, permet de maintenir les cuvettes à température constante. La partie centrale du support 4, au milieu de la couronne fixe 1, comporte un panier 5 servant de support à deux anneaux concentriques de flacons de réactifs 6 régulièrement répartis autour d'un réservoir cylindrique central 7 constituant une station de lavage pour des pipettes de prélèvement, comme on le verra plus loin. Les flacons 6 sont correctement positionnés sur le plateau 5 par des jeux de cales ou d'entretoises 8. La couronne réactionnelle 1 et le plateau 5 de réactifs sont donc tous deux fixes et placés coaxialement sur le même support. On a bien noté que la couronne était démontable secteur par secteur, par dégagement d'un tiroir 1a, 1b ou 1c, les deux autres restant en place pendant le remplacement du premier.Quand aux flacons 6 ils sont aisément accessibles par le dessus. A côté de cet ensemble constitué de la couronne et son plateau central, est disposé un autre plateau tournant 9, visible sur la figure 1, destiné à recevoir les tubes d'échantillons à analyser et muni d'alvéoles périphériques 14 pour recevoir ces tubes. Ce plateau de stockage d'échantillon tourne pas-à-pas et permet de présenter chaque tube en face du dispositif de prélèvement. Un lecteur code-barres 15 disposé à proximité permet de recueillir les informations lues et de les transférer au bloc d'enregistrement et de commande de l'analyseur.

En se reportant à la figure 2 on voit à l'intérieur du support 4, au-dessous du plateau supérieur 5, un disque tournant désigné dans son ensemble par la référence 2 sur lequel ou a l'intérieur duquel est rapportée une fibre optique 20. Le disque tourne sur des galets 21 montés au sommet de potences support 22. Il s'étend jusque sous les puits 11 de la couronne 1. Une extrémité 23 de la fibre optique 20 débouche justement en face du fond des puits 11 de ladite couronne. Son extrémité opposée 24 se situe au centre du disque et débouche vers le bas en direction d'une lampe tungstène-halogène émettant un faisceau de lumière en direction de l'extrémité 24 de la fibre, en traversant une roue 40 à filtres colorés. Au centre du disque 2 la fibre optique 20 comporte une dérivation 25 en direction d'un photomultiplicateur de référence 26. A l'extrémité du disque 2, sur un surplomb 27 est monté un photomultiplicateur de mesure 28. Ce dernier est exactement à l'aplomb d'un puits 11 de la couronne 1. Un moteur d'entraînement 29 assure la rotation du disque 2. On a représenté également à la partie supérieure de la figure 2 le mécanisme de manoeuvre des pipettes de prélèvement, désigné dans son ensemble par la référence 3. Ce mécanisme comprend essentiellement un mât central fixe et vertical 30 sur lequel coulisse verticalement une potence 31. Cette dernière reçoit elle-même un bras rotatif 32 à axe de rotation central 33, dont chaque extrémité porte au moins une pipette de prélèvement 34. On comprend que par le mouvement de rotation combiné de la potence et du bras rotatif, les pipettes puissent desservir les flacons de réactif 6, les cuvettes 12, les tubes d'échantillons du plateau de stockage 9, et la station de lavage 7.

On décrira maintenant plus aisément, sur la base de ces figures simplifiées 1 et 2, un mode également simplifié de fonctionnement de l'analyseur.

Les alvéoles périphériques 14 du plateau tournant 9 sont garnies des tubes d'échantillon à analyser. Après lecture d'un tube par le code-barre 15, qui a détecté l'analyse à effectuer, commande est donnée au mécanisme 3 d'avoir à prélever dans ledit tube une petite quantité d'échantillon. La levée de la potence 31 le long du mât 30 permet à une pipette 34 de se dégager de la station de lavage 7. Par rotation combinée de la potence et du bras rotatif 32, suivie d'une descente de la potence une pipette pénètre dans le tube en question, y prélève une petite quantité d'échantillon et par un mouvement inverse va le déposer dans une cuvette de réaction 12 qui est disponible sur la couronne 1. La pipette va subir ensuite un lavage à la station 7 puis est à nouveau déplacée par le mécanisme 3 en direction du plateau 5 ou elle prélève une petite quantité de réactif dans un flacon 6. Celui-ci est ensuite déposé dans la cuvette 12 contenant l'échantillon, avec lequel il se mélange ; la réaction échantillon-réactif commence dans le tube considéré. L'opération de remplissage se poursuit ensuite à partir d'un autre tube vers une autre cuvette de réaction et ainsi de suite. Simultanément est assurée la lecture d'autres cuvettes préalablement remplies. A cette fin le disque 2 est mis en rotation pas-à-pas jusqu'à ce que le photomultiplicateur de mesure 28 et l'extrémité 23 de la fibre optique 20 se trouvent positionnés à l'aplomb de la cuvette 12 considérée. L'émission de lumière de la lampe 41, se transmet après avoir traversé le filtre voulu, de la roue à filtres 40, par la fibre 20 jusqu'à la cuvette 12 à fond transparent, et la mesure colorimétrique est assurée par le photomultiplicateur 28. Dès que la mesure est effectuée, le moteur 29 déplace le disque tournant vers une autre cuvette de réaction pour assurer une nouvelle mesure. Le photomultiplicateur peut ainsi balayer toute la couronne réactionnelle 1. Dès qu'un tiroir 1a, 1b ou 1c de la couronne a été traité, il peut être retiré, déchargé de ses cuvettes usagées et garni de cuvettes vides, puis remis en place sur la couronne. Pendant ce temps la mesure et/ou le remplissage a pû être poursuivi sans interruption sur les deux autres tiroirs.

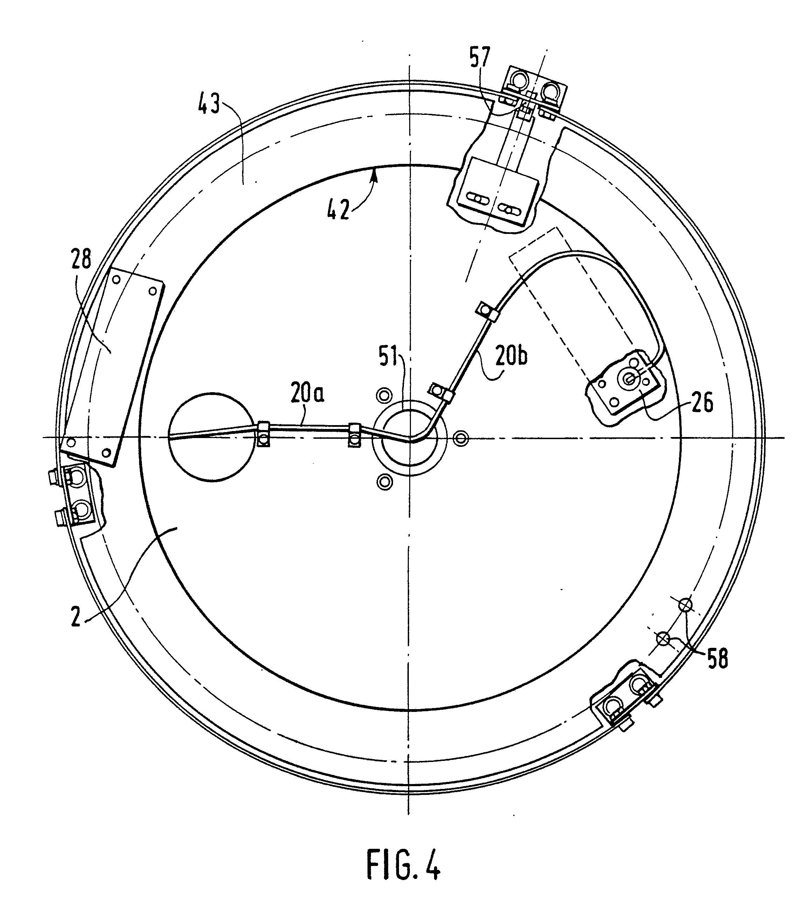

L'ensemble tournant à fibre optique désigné dans son ensemble sous la référence 2, a été représenté très schématiquement à la figure 2. Par contre on a représenté plus en détail aux figures 3 et 4 un mode de réalisation avantageux de cet ensemble qui présente des caractéristiques particulières. Le disque ou plateau tournant 2 présente une bordure circulaire verticale 42 prolongée par un rebord périphérique horizontal 43. Sa partie centrale est solidaire d'une platine 51 traversée par une ouverture 52, qui est montée sur des roulements 44 et est entraînée en rotation par une couronne d'entraînement 45 elle-même entraînée par un moteur 46 par l'intermédiaire d'une autre couronne de démultiplication 47 et des courroies crantées de transmission 48. Un socle fixe 49 supporte le moteur 46 et le palier support 50 de la couronne intermédiaire 47. L'orifice 52 de la platine forme avec un orifice central prévu sur la couronne d'entraînement 45 un puits 53 pour le passage d'une fibre optique 20 qui affleure à la partie inférieure de ladite couronne. Au-dessous de celle-ci, en face de la fibre se trouvent les filtres de la roue à filtres 40, la lampe 41 étant montée encore au-dessous en alignement avec le puits 53.

A la sortie du puits 53 la fibre optique se divise en deux parties 20a et 20b qui se développent de chaque côté du plateau 2. La fibre 20a débouche dans un boîtier 54 fixé extérieurement à la bordure 42 et qui permet de la positionner pour que son extrémité 23 soit orientée vers le haut en direction de lentilles optiques de sortie 55. Le photomultiplicateur de mesure 28 est disposé au-dessus du rebord périphérique 43 pour que sa partie sensible soit à l'aplomb du boîtier 54 et orientée vers le bas en direction des lentilles 55. La fibre 20b débouche du côté opposé dans un photomultiplicateur de référence 26 fixé sous le disque 2 a proximité de la bordure circulaire 42, le débattement entre ledit plateau et son mécanisme d'entraînement à pignons autorisant le positionnement de cette pièce.

Le plateau tournant 2, avec ses deux photomultiplicateurs, coiffe la couronne réactionnelle fixe 1, disposée sous le rebord périphérique 43. En se référant plus particulièrement à la figure 4, on voit que le disque tournant 2 est entouré d'un cerclage fixe 56 pour l'occultation de la lumière dans la zone circulaire de mesure. Une fourchette optique 57 de détection de la position de référence du plateau, pour le moteur pas-à-pas d'entraînement, est également prévue sur le cerclage fixe. Sur la périphérie du rebord 43 on remarque deux trous de distribution 58 dont l'utilité sera décrite plus loin.

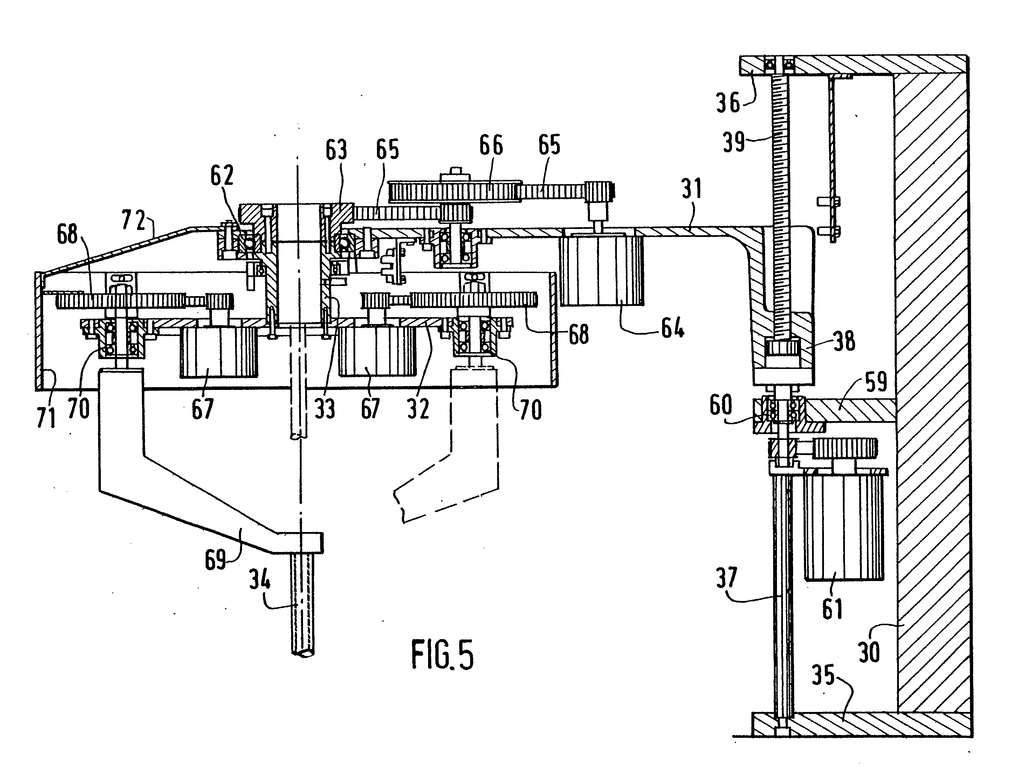

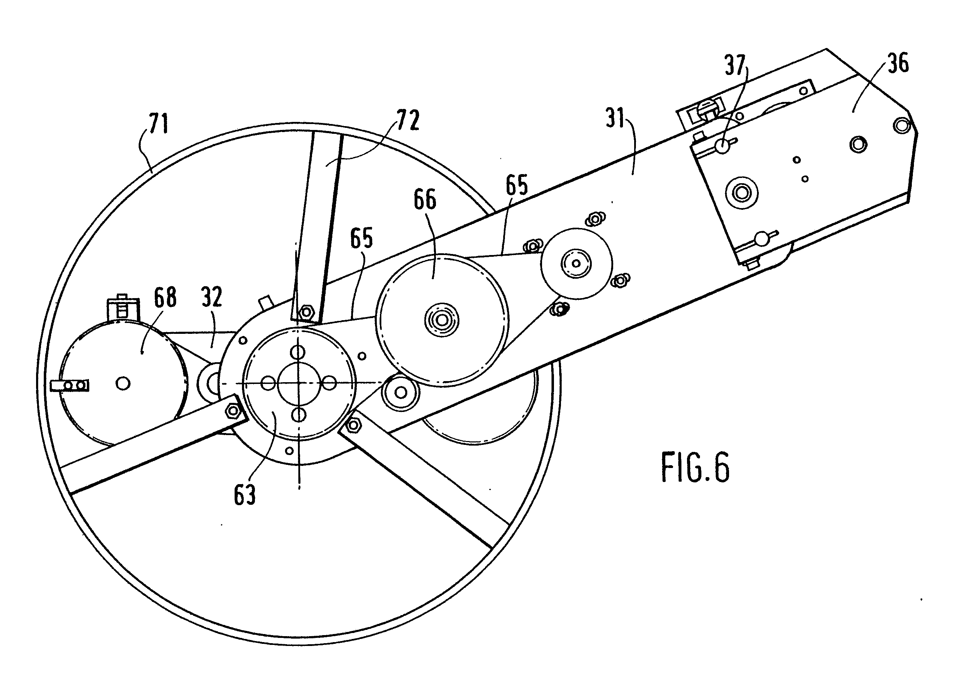

Le mécanisme de manoeuvre des pipettes de prélèvement désigné dans son ensemble par la référence 3, a été représenté très schématiquement à la figure 2. On a représenté plus en détail aux figures 5 et 6 un mode de réalisation avantageux de cet ensemble.

Le mât central 30 est monté sur un socle fixe 35 et est coiffé par une platine d'extrémité 36, à sa partie supérieure. Entre le socle et la platine s'étendent deux colonnes verticales de guidage 37 sur lesquelles coulisse le pied 38 de la potence 31. Une tige filetée 39 disposée verticalement entre les colonnes 37 est soutenue par une entretoise 59 solidaire du mât 30, par l'intermédiaire de roulements 60. Cette tige filetée est entraînée en rotation par un petit moteur 61. Son filetage coopère avec un taraudage prévu dans le pied 38 de la potence, de telle sorte que la rotation de la tige 39 dans un sens ou dans l'autre assure la montée ou la descente de la potence 31 qui coulisse sur les colonnes 37. La potence 31 se déploie au-dessus et en direction du centre de la couronne réactionnelle. Un bras rotatif 32 est monté sous la potence ; il est solidaire d'un manchon central 33 soutenu par l'extrémité de la potence par l'intermédiaire de roulements 62. L'axe vertical du manchon 33 se situe à l'aplomb du centre de la couronne réactionnelle.

Le manchon est lié à un pignon cranté d'entraînement 63, mis en rotation par un moteur 64 par l'intermédiaire de courroies de transmission 65 et d'un autre pignon démultiplicateur 66. On notera que les pignons que les figures d'entraînement 63, 66 et les courroies 65 sont montés au-dessus de la potence 31 tandis que le moteur 64 est monté au-dessous, entre le bras rotatif et le pied 38 de la potence. Sous ledit bras rotatif 32, de part et d'autre du manchon 33 sont disposés deux moteurs 67 qui entraînent chacun en rotation par l'intermédiaire d'un nouveau pignon d'entraînement 68, un bras de prélèvement 69. Le pignon 68 est monté au-dessus et en bout du bras rotatif 32, et l'axe de rotation du bras de prélèvement 69, monté sous le bras rotatif, prolonge l'axe central du pignon d'entraînement 68, un jeu de roulements 70 étant prévu à ce niveau. On voit sur la gauche de la figure 5 ce bras de prélèvement 69 qui a la forme d'une crosse dont l'extrémité inférieure se déploie selon un cercle de rayon égal à l'entraxe du manchon 33 et de son pignon d'entraînement 68. L'extrémité du bras peut donc se placer au-dessus de la partie centrale de la couronne réactionnelle. Cette extrémité porte deux pipettes de prélèvement 34 s'étendant vers le bas. Celles-ci sont raccordées par des petits conduits souples non représentés qui passent le long du bras de prélèvement 69, puis sous le bras rotatif 32, puis en traversant le manchon creux 33, se déploient sur la potence et rejoignent des mécanismes d'aspiration et refoulement appropriés tels que des seringues d'injection non représentées.

Ainsi le bras rotatif 32 est muni à chacune de ses deux extrêmités d'un bras de prélèvement 69, dont le déplacement en rotation est commandé indépendamment de celui de l'autre bras. Enfin un capot circulaire d'habillage 71 soutenu par des pattes de fixation 72 montées sur la potence 31, protège le bras rotatif 32.

On a décrit plus haut en référence aux figures 1 et 2, un mode simplifié de fonctionnement de l'analyseur. La présence des deux bras de prélèvement à deux pipettes chacun montés en bout de l'arbre rotatif, et eux-mêmes tournants, comme décrits ci-dessus, autorise des cadences de fonctionnement beaucoup plus intéressantes, un des bras étant opérationnel c'est-àdire chargeant les cuvettes de réaction, pendant que l'autre est au poste de lavage.

On décrit ci-après un exemple de cycle de distribution et de lecture qui peut être assuré avec les mécanismes perfectionnés tels que décrits en référence aux figures 3 à 6.

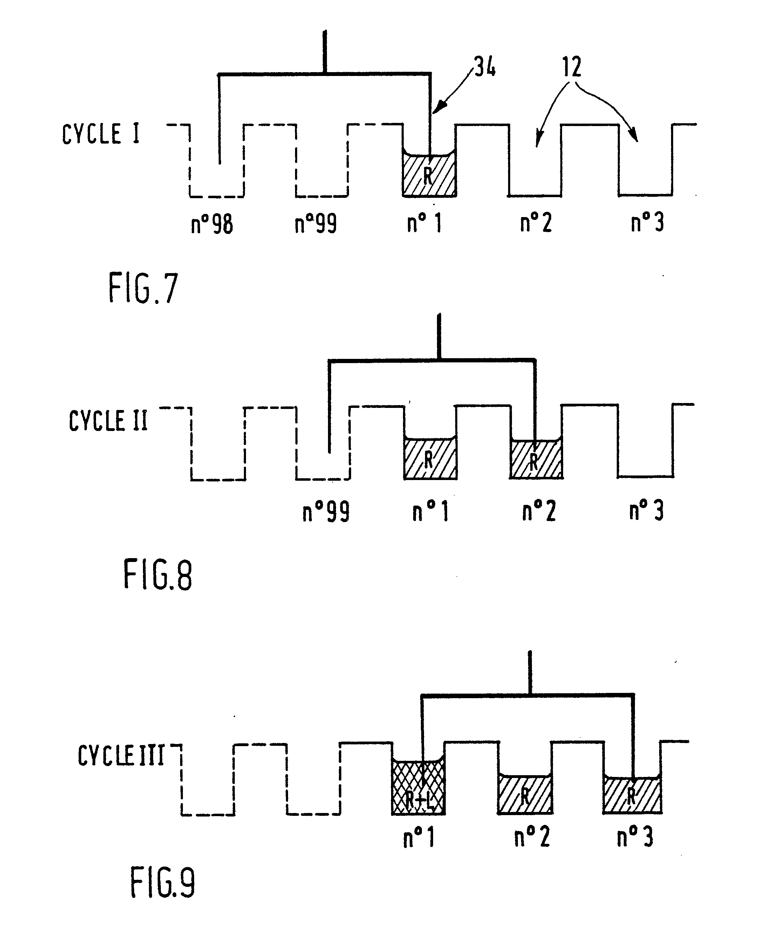

La couronne réactionnelle, en début de manipulation, est vide de produit et on suppose qu'elle supporte 99 coupelles réparties sur toute sa périphérie. Au démarrage un bras de prélèvement va d'abord se déplacer de telle sorte qu'une des deux pipettes 34 qu'il porte plonge dans un flacon de réactif voulu R et en aspire une petite quantité. Puis la potence se soulève pour que ladite pipette se dégage du flacon, et par le jeu combiné de la rotation du bras rotatif et de la pipette, celle-ci est amenée à l'aplomb d'une cuvette 12 qu'on peut désigner comme cuvette N° 1 sur la couronne. Le réactif R est alors dispensé dans la cuvette par abaissement de la potence 31, la pipette traversant un des deux trous de distribution 58 dont on a parlé plus haut, pour déboucher juste au-dessus de la cuvette. La pipette voisine a, de son côté, pénétré dans le trou 58 voisin à l'aplomb d'une autre cuvette placée deux pas plus loin et qui est donc la cuvette N° 98 (figure 7). Il est évident qu'à ce moment là, le plateau tournant 2 est immobile ; il ne reprendra son mouvement que lorsque les pipettes seront remontées hors des trous 58. Puis les pipettes se dégagent de la couronne de réaction. Le premier cycle est terminé.

Le second cycle de distribution commence alors. Pendant que les pipettes du premier cycle vont vers le bac de lavage, les deux pipettes du bras voisin se déplacent, comme pour le premier cycle, de telle sorte qu'une des deux prélève un autre réactif R et le distribue dans la cuvette N° 2 (figure 8) . Puis à nouveau le bras amène les pipettes au lavage.

Le cycle III (figure 9) utilise cette fois simultanément les deux pipettes d'un bras de chargement, l'une pour distribuer du réactif R dans la cuvette N° 3, l'autre pour distribuer de l'échantillon E dans la cuvette N° 1 où il se mélange au réactif, les deux prélèvements ayant été effectués presque simultanément.

Puis l'opération de remplissage se poursuit dans la totalité des cuvettes selon des cycles successifs identiques au cycle III.

Après chaque distribution de réactif et d'échantillon le plateau tournant 2 s'est déplacé d'un pas et le photomultiplicateur a assuré une lecture. A l'issue du cycle I, il a assuré une première lecture de la cuvette N° 1 remplie seulement de réactif, ce qui donne une valeur de référence. A l'issue du cycle II, il assure une première lecture de la cuvette N° 2 et une seconde lecture de la cuvette N° 1 ou il a une deuxième valeur de référence. A l'issue du cycle III il assure une première lecture de la cuvette N° 3 remplie de réactif et d'échantillon, une seconde lecture de la N° 2 et une troisième de la N° 1...et ainsi de suite.

On peut ainsi obtenir pour chaque cuvette une pluralité de mesures qui permettent de tracer des courbes et de tenir compte de la durée de réaction de chaque mélange, variable selon le réactif utilisé.

La manoeuvre de ces éléments est assurée de façon automatique programmée. Grâce à son informatique puissante l'appareil est capable de provoquer une analyse et une réanalyse automatique de tout échantillon. Piloté par un certain nombre de microprocesseurs, il peut travailler en multifonctions simultanées, et stocker des informations et résultats concernant les patients. Les résultats sont avantageusement édités sur imprimante donnant l'identification du client et les valeurs détaillées de l'analyse.

L'invention, décrite sur la base d'un exemple de réalisation n'est pas limitée à ce mode de réalisation, mais en englobe aussi toutes les variantes constructives.

## Revendications

1.- Analyseur automatique d'échantillons par colorimétrie, notamment pour les analyses sanguines, comportant un plateau porteur d'échantillons, une couronne réactionnelle fixe munie sur sa périphérie d'une pluralité d'alvéoles pouvant supporter des cuvettes transparentes destinées à recevoir un mélange d'échantillon et de réactif à analyser, un autre plateau porteur de flacons de réactifs, un système de prélèvement et de distribution de l'échantillon et du réactif dans les cuvettes réactionnelles constitué d'un mécanisme du genre à bras rotatif et/ou articulés portant des pipettes d'aspiration, et un ensemble d'analyse colorimétrique utilisant notamment une source lumineuse fixe, des filtres colorés et un photomultiplicateur de mesure du rayon lumineux ayant traversé une cuvette réactionnelle lequel photomultiplicateur étant monté sur un disque tournant concentrique à la couronne réactionnelle caractérisé en ce que ledit photomultiplicateur de mesure (28) est orienté vers le bas en direction du sommet de cuvettes transparentes (12) montées sur la. périphérie de la couronne réactionnelle (1), le disque tournant (2) portant également au moins une fibre optique (20) entre une partie centrale où elle reçoit la lumière provenant de la source lumineuse (41) et une partie périphérique où son autre extrémité (23) débouche en face du fond de la cuvette, en alignement avec le photomultiplicateur, et en ce que des moyens sont prévus pour assurer en continu à l'aide d'au moins deux pipettes d'aspiration à fonctionnement indépendant, le prélèvement à la fois d'échantillons et de réactif et leur distribution dans les coupelles.

2.- Analyseur selon la revendication 1, caractérisé en ce que la couronne réactionnelle (1) est formée par la juxtaposition de trois secteurs de couronnes 1a, 1b et 1c formant des tiroirs amovibles pouvant être écartés de ses voisins.

3.-Analyseur selon la revendication 1, caractérisé en ce qu'un panier fixe (5) servant de support à une pluralité de flacons (6) de réactif est disposé au centre de la couronne réactionnelle fixe.

4.- Analyseur selon les revendications 1 et 3, caractérisé en ce que les flacons (6) sont régulièrement et concentriquement répartis dans le panier (5) autour d'un réservoir cylindrique central (7) constituant une station de lavage.

5.- Analyseur selon la revendication 1, caractérisé en ce que la fibre optique (20) portée par le disque tournant (2) comporte une dérivation (25) en direction d'un photomultiplicateur de référence (26).

6.- Analyseur selon la revendication 1, caractérisé en ce que le disque tournant (2) présente une bordure circulaire verticale (42) prolongée par un rebord périphérique horizontal (43) sur lequel est monté la photomultiplicateur de mesure (28), la fibre optique (20) débouchant dans un boîtier (54) fixé extérieurement à la bordure circulaire verticale.

7.- Analyseur selon la revendication 1, caractérisé en ce que le disque tournant (2) est solidaire d'une couronne d'entraînement (45) mise en rotation par un moteur (46) par l'intermédiaire de courroies de transmission (48) et d'au moins une couronne de démultiplication (47).

8.- Analyseur selon les revendications 1 et 7, caractérisé en ce que le disque tournant (2) comporte une platine centrale (51) qui est traversée par une ouverture (52) et qui est solidaire de la couronne d'entraînement (45) elle-même munie d'un puits central (53) pour le passage de la fibre (20) qui affleure à la partie inférieure de la dite couronne.

9.- Analyseur selon les revendications 1 et 8,

caractérisé en ce que la fibre optique (20) portée par le disque tournant (2) se divise en deux parties (20a et 20b) qui se développent de chaque côté du plateau, et en ce que l'une des fibres (20b) débouche dans un photomultiplicateur de référence (26) qui est lui-même fixé au disque tournant.

10.- Analyseur selon les revendications 1, 6 et 9, caractérisé en ce que l'extrémité (23) de la fibre optique (20a) débouche dans un boîtier (54) fixé extérieurement à la bordure (42), et est orientée vers le haut en direction de lentilles optiques de sortie (55).

11.- Analyseur selon la revendication 1, caractérisé en ce que le disque tournant (2) est entouré d'un cerclage fixe (56) d'occultation de lumière.

12.- Analyseur selon les revendications 1 et 6, caractérisé en ce que deux trous de distribution (58) sont prévus sur le rebord périphérique horizontal (43) du disque tournant (2).

13.- Analyseur selon la revendication 1, caractérisé en ce que le mécanisme de manoeuvre (3) des pipettes de prélèvement (34) comprend un mât vertical fixe (30), une potence (31) coulissant verticalement sur ledit mât, un bras rotatif (32) monté sur la potence, et au moins une pipette de prélèvement montée à chaque extrémité du bras rotatif.

14.- Analyseur selon les revendications 1 et 13, caractérisé en ce que le mouvement de coulissement de la potence (31) sur des guides (37) solidaires du mât (30) est assuré par une tige filetée verticale (39) entraînée en rotation par un moteur (61) et coopérant avec un taraudage prévu dans le pied (38) de la potence.

15.- Analyseur selon les revendications 1 et 13, caractérisé en ce que le bras rotatif (32) solidaire d'un manchon central (33) est soutenu au-dessous de l'extrémité de la potence (31) et est mis en rotation par un moteur (64) par l'intermédiaire de courroies de transmission (65) et d'au moins un pignon démultiplicateur (66).

16.- Analyseur selon les revendications 1 et 15, caractérisé en ce que deux moteurs (67) fixés sous le bras rotatif (32) entraînent chacun en rotation autour d'axes localisés à chaque extrémité du bras rotatif, un bras de prélèvement (69) portant chacun deux pipettes de prélèvement (34).

17.- Analyseur selon les revendications 15 et 16, caractérisé en ce qu'un capot circulaire d'habillage (71) soutenu par des pattes de fixation (72), montées sur la potence (31), protège le bras rotatif (32).

FIG.1

EP 0 363 265 A1

FIG. 2

FIG.3

EP 0 363 265 A1

FIG. 4

FIG.5

FIG.6

EP 0 363 265 A1

FIG.7

FIG.8

FIG.9

| | Office européen des brevets | RAPPORT DE RECHERCHE EUROPEENNE | Numero de la demande |
| | | | EP 89 40 2705 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A-2 083 616 (COULTER ELECTRONICS) * Résumé; figures 1,3; page 1, lignes 114-120; page 2, lignes 47-59,106-110; page 3, lignes 93-100,108-127; page 4, lignes 35-57 * --- | 1 | G 01 N 21/25 G 01 N 35/06 |
| Y | EP-A-0 136 002 (LABSYSTEMS OY) * Figures; page 2, lignes 5-12,22-25; page 3, lignes 5-9 * --- | 1 | |
| A | US-A-4 170 625 (H.H. WELCH) * Figure 1; colonne 2, lignes 27-35; revendicaton 2 * --- | 2 | |
| A | PATENT ABSTRACTS OF JAPAN, vol. 8, no. 75 (P-266)[1512], 7 avril 1984, page 6 P 266; & JP-A-58 219 456 (AROKA K.K.) 20-12-1983 --- | 3 | |
| A | WO-A-8 200 361 (EFLAB OY) * Figure 2; page 2, lignes 3-17 * --- | 5 | DOMAINES TECHNIQUES RECHERCHES (Int. Cl.5) |
| A | EP-A-0 216 026 (JAPAN TECTRON INSTRUMENTS CORP.) * Figures 7-8; colonne 15, ligne 48 - colonne 16, ligne 15 * --- | 13 | G 01 N |
| A | PATENT ABSTRACTS OF JAPAN, vol. 12, no. 95 (P-681)[2492], 29 mars 1988, page 56 P 681; & JP-A-62 228 935 (TOSHIBA CORP.) 07-10-1987 ----- | | |

Le présent rapport a été établi pour toutes les revendications

| Lieu de la recherche | Date d'achèvement de la recherche | Examinateur |
|---|---|---|
| LA HAYE | 03-01-1990 | HOCQUET A.P.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................................................
& : membre de la même famille, document correspondant

EPO FORM 1503 03.82 (P0402)